# EUROPEAN PATENT APPLICATION

(11) **EP 2 958 221 A1**
(43) Date of publication of application: **23.12.2015**
(21) Application number: 15171437.5
(22) Date of filing: 10.06.2015
(51) Int. Cl.: H02M 1/32, H02M 7/5387, H02M 1/00

(54) **SYSTEM FOR FIRE-MODE CONTROL OF AN INVERTER IN EMERGENCY SITUATIONS**

(30) Priority: 16.06.2014 KR 20140072595
(71) Applicant: LSIS Co., Ltd., Anyang-si, Gyeonggi-do 431-848 (KR)
(72) Inventor: Lee, Hu Jin, 330-140 Chungcheongnam-do (KR); Kim, Jong Chan, 361-815 Chungcheongbuk-do (KR)
(74) Representative: Groth & Co. KB

(57) **Abstract**

A system for inverter operation control in an emergency situation is provided, the system including: an inverter; an upper level controller configured to set a first operation mode for a normal operation of the inverter and a second operation mode in response to an emergency situation of the inverter; and a controller configured to control an operation of the inverter, by stopping an operation of the inverter when a measured voltage value or a measured current value of the inverter satisfies a first condition when the first operation mode is set, and by maintaining an operation of the inverter even when a measured voltage value or a measured current value of the inverter satisfies a first condition when the second operation mode is set.

## Description

### FIELD OF THE DISCLOSURE

The present disclosure relates to a system for inverter operation control in a situation of emergency. More particularly, according to an exemplary embodiment of the present disclosure, the system for inverter operation control is capable of continuous operation by ignoring a slight fault of the inverter, when the continuous operation of the inverter is required in a situation of emergency.

### DISCUSSION OF THE RELATED ART

An inverter is a device to control torque and speed of a motor. There have been introduced various motor speed controlling methods, some of which representative methods are the first voltage control method and the frequency control method. The inverter may be used for, such as efficiency control, power factor control, etc. In addition, the inverter may also be used by being applied to, such as a preliminary power supply, an uninterruptible power supply for a computer, direct current transmission, etc.

Purposes of using the inverter are for process control, factory automation, and energy conservation. For example, in the case of a heating furnace blower, an inverter may control speed of the blower according to types or quantity of products. Temperature inside the heating furnace may be controlled as the optimal temperature by controlling air volume of the blower, and the quality of the product can be improved as well. Thereby, a great retrenchment in energy consumption can be obtained. Currently, researches for developing technology to efficiently control an inverter when an urgent situation such as instantaneous blackout occurring are being conducted actively.

In a conventional technique, an inverter should immediately stop an operation when a fault occurs during the operation, and restart the operation after the fault is repaired.

However, a serious accident may be caused in a situation of emergency, when the operation of the inverter is stopped as often as a slight fault occurs in the inverter, in the case where the inverter drives an apparatus such as a firefighting pump, a ventilation fan in a tunnel, etc.

### SUMMARY OF THE DISCLOSURE

One of technical challenges which the present disclosure intends to achieve is, to provide a system for inverter operation control which is capable of continuous operation by ignoring a slight fault of the inverter, when the continuous operation of the inverter is required in a situation of emergency.

Technical challenges of the present disclosure are not limited to the above-mentioned technical challenges. Other technical challenges which are not mentioned will be clearly understandable for persons who skilled in the technical field to which exemplary embodiments suggested from the following description belong.

In a general aspect of the present disclosure, there is provided a system for inverter operation control in an emergency situation, the system comprising: an inverter; an upper level controller configured to set a first operation mode for a normal operation of the inverter and a second operation mode in response to an emergency situation of the inverter; and a controller configured to control an operation of the inverter, by stopping an operation of the inverter when a measured voltage value or a measured current value of the inverter satisfies a first condition when the first operation mode is set, and by maintaining an operation of the inverter even when a measured voltage value or a measured current value of the inverter satisfies a first condition when the second operation mode is set.

In some exemplary embodiments of the present disclosure, the controller may stop an operation of the inverter when a measured voltage value or a measured current value of the inverter satisfies a second condition, when the second operation mode is set.

In some exemplary embodiments of the present disclosure, the first condition may include at least one of a command loss, a voltage or current overload failing to reach the second condition, an output phase deficiency, a low voltage, or a fan trip generation.

In some exemplary embodiments of the present disclosure, the second condition may include a fault signal generation, possibly leading to a secondary damage to a device connected to the inverter, as well as to the inverter.

In some exemplary embodiments of the present disclosure, the second condition may include at least one of an overcurrent trip condition, an overvoltage trop condition, a hardware fault condition, or a predetermined external situation fault condition.

In some exemplary embodiments of the present disclosure, the overcurrent trip condition may include an overcurrent trip generation due to an arm short or an overcurrent trip generation due to an output overcurrent.

In some exemplary embodiments of the present disclosure, the hardware fault condition may include a fault in a current detection circuit or a fault in the controller.

In some exemplary embodiments of the present disclosure, the system further comprising: a voltage detection unit; and a current detection unit, wherein the inverter may include: a rectification unit configured to output by rectifying an inputted AC (Alternating Current) electricity; a smoothing unit configured to output a DC (Direct Current)-link voltage by smoothing an output voltage inputted from the rectification unit; and an inverter unit configured to output an AC (Alternating Current) voltage by converting a DC (Direct Current) voltage inputted from the smoothing unit to the AC voltage, wherein the voltage detection unit may measure a value of the DC-link voltage by being connected to the smoothing unit of the inverter, and the current detection unit may measure a value of an output current of the inverter by being connected to an output terminal of the inverter.

In some exemplary embodiments of the present disclosure, the inverter may include a plurality of inverters, the controller may include a plurality of controllers installed corresponding to each of the plurality of inverters, the upper level controller may set the first operation mode or the second operation mode with respect to at least one inverter selected from the plurality of inverters, and each of the plurality of controllers may control an operation of the corresponding inverter, by stopping an operation of the inverter when a measured voltage value or a measured current value of the inverter satisfies a first condition when the first operation mode is set, and by maintaining an operation of the inverter even when a measured voltage value or a measured current value of the inverter satisfies a first condition when the second operation mode is set.

In some exemplary embodiments of the present disclosure, the system further comprising: a memory configured, by being controlled by the controller, to store an operation information according to the first operation mode or the second operation mode, and a fault information generated in each of the operation modes.

In some exemplary embodiments of the present disclosure, the inverter may include a plurality of inverters, the controller may include a plurality of controllers installed corresponding to each of the plurality of inverters, the upper level controller may set the first operation mode or the second operation mode with respect to at least one inverter selected from the plurality of inverters, and each of the plurality of controllers may control an operation of the corresponding inverter.

In some exemplary embodiments of the present disclosure, the inverter may include a plurality of inverters, the upper level controller may set the first operation mode or the second operation mode with respect to at least one inverter selected from the plurality of inverters, and the controller may control an operation of each of the inverters according to an operation mode set by being set with an individual operation mode for each of the plurality of inverters from the upper level controller.

In some exemplary embodiments of the present disclosure, the upper level controller may set by selecting either one of the first operation mode or the second operation mode based on a type of load driven by each of the plurality of inverters.

In some exemplary embodiments of the present disclosure, the upper level controller may set by selecting either one of the first operation mode or the second operation mode based on a type or an importance of load driven by each of the plurality of inverters.

In some exemplary embodiments of the present disclosure, the upper level controller may set by selecting either one of the first operation mode or the second operation mode based on an importance of electric power consumption possessed by a relevant load among a whole electric power consumption of load driven by each of the plurality of inverters.

In some exemplary embodiment of the present disclosure, the upper level controller may preset an operation mode for each of the plurality of inverters before operation of a relevant inverter.

In some exemplary embodiment of the present disclosure, the upper level controller may dynamically set an operation mode for each of the plurality of inverters, based on a whole load, or when an emergency situation occurs during operation of a relevant inverter.

According to an exemplary embodiment of the present disclosure, the risk of accident due to shutdown of the inverter in an emergency may be prevented, by enabling the inverter to continuously operate in disregard of light faults through a separate external input signal, when the continuous operation of the inverter is required in a situation of emergency.

### BRIEF DESCRIPTION OF THE DRAWINGS

FIG. 1 is a block diagram illustrating a system for inverter operation control in an emergency situation according to an exemplary embodiment of the present disclosure.
FIG. 2 is a view illustrating an inverter operation mode setting in an emergency situation according to an exemplary embodiment of the present disclosure.
FIG. 3 is a flow chart illustrating an inverter operation control method when a first mode is set in a system for inverter operation control in an emergency situation according to an exemplary embodiment of the present disclosure.
FIG. 4 is a flow chart illustrating an inverter operation control method when a second mode is set in a system for inverter operation control in an emergency situation according to an exemplary embodiment of the present disclosure.
FIG. 5 is a block diagram illustrating a system for inverter operation control in an emergency situation according to another exemplary embodiment of the present disclosure.
FIG. 6 is a block diagram illustrating a system for inverter operation control in an emergency situation according to still another exemplary embodiment of the present disclosure.

### DETAILED DESCRIPTION

Hereinafter, reference will now be made in detail to the embodiments of the present disclosure, examples of which are illustrated in the accompanying drawings. The present disclosure may, however, be embodied in many different forms and should not be construed as being limited to the embodiments set forth herein; rather, that alternate embodiments included in other retrogressive inventions or falling within the spirit and scope of the present disclosure will fully convey the concept of the invention to those skilled in the art.

Although the terms used in the present disclosure are selected from generally known and used terms, some of the terms mentioned in the description of the present disclosure have been selected by the applicant at his or her discretion, the detailed meanings of which are described in relevant parts of the description herein. Therefore, the present disclosure shall be understood, not simply by the general terms used but by the meaning of each term lying within.

That is, in the following description herein, the term "including" or "comprising" does not exclude the presence of elements or steps other than those listed.

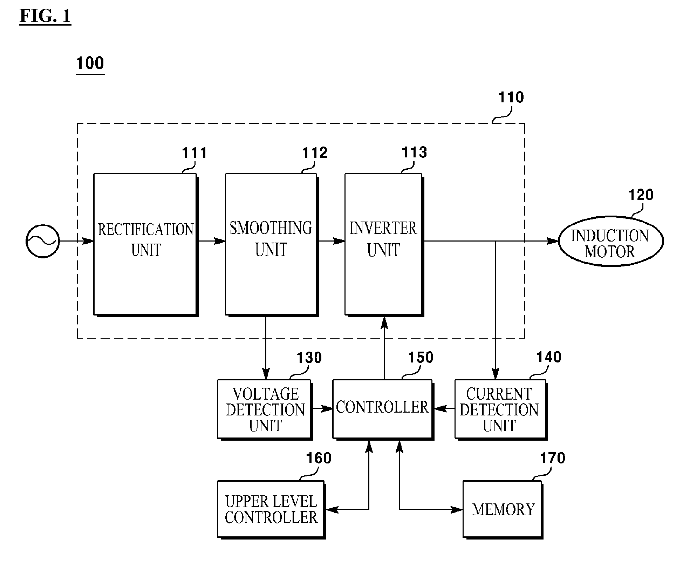

FIG. 1 is a block diagram illustrating a system for inverter operation control in an emergency situation according to an exemplary embodiment of the present disclosure.

Referring to FIG. 1, the system for inverter operation control (100) may include an inverter (110), an induction motor (120), a voltage detection unit (130), a current detection unit (140), a controller (150), an upper level controller (160), and a memory (170).

The inverter (110) may include a rectification unit (111), a smoothing unit (112), and an inverter unit (113).

The rectification unit (111) may output by rectifying inputted AC (Alternating Current) electricity. The smoothing unit (112) may output a DC (Direct Current)-link voltage by smoothing an output voltage inputted from the rectification unit (111). The smoothing unit (112) may include a capacitor. The inverter unit (113) may output an AC (Alternating Current) voltage by converting a DC (Direct Current) voltage inputted from the smoothing unit to the AC voltage.

The inverter (110) may drive the induction motor (120) by being controlled by the controller (150).

The induction motor (120) may be driven by the AC voltage outputted by the inverter unit (113).

The voltage detection unit (130) may measure a value of the DC-link voltage. The voltage detection unit (130) may detect an overvoltage.

The current detection unit (140) may detect an overcurrent flowing in a circuit by being installed at the inverter unit (113) and the induction motor (120).

The controller (150) may generate a control signal to control the inverter unit (113) according to the voltage value and current value detected by the voltage detection unit (130) and the current detection unit (140), and may transmit the generated control signal to the inverter (110).

The upper level controller (160) may set an emergency operation mode of the controller (150), in order to enable the inverter (110) to continuously operate in disregard of light faults, when the continuous operation of the inverter is required in a situation of emergency.

The controller (150) may control an operation of the inverter (110), by setting an operation mode of the inverter (110) as a normal operation mode or an emergency operation mode according to a setting operation of the upper level controller (160).

For this purpose, the upper level controller (160) may set a first operation mode for a normal operation of the inverter (110) and a second operation mode in response to an emergency situation of the inverter (110).

The controller (150) may stop an operation of the inverter (110) when a measured voltage value or a measured current value of the inverter (110) satisfies a first condition, when the first operation mode is set by the upper level controller (160).

Meanwhile, the controller (150) may maintain an operation of the inverter (110) even when a measured voltage value or a measured current value of the inverter (110) satisfies a first condition, when the second operation mode is set by the upper level controller (160).

The controller (150) may stop an operation of the inverter (110) when a measured voltage value or a measured current value of the inverter (110) satisfies a second condition, when the second operation mode is set.

Here, the first condition may include at least one of a command loss, a voltage or current overload failing to reach the second condition, an output phase deficiency, a low voltage, or a fan trip generation.

The second condition may include a fault signal generation, possibly leading to a secondary damage to a device connected to the inverter (110), as well as to the inverter (110). For example, the second condition may include at least one of an overcurrent trip condition, an overvoltage trop condition, a hardware fault condition, or a predetermined external situation fault condition.

The overcurrent trip condition may include an overcurrent trip generation due to an arm short or an overcurrent trip generation due to an output overcurrent. For example, an overcurrent trip may be generated when a current exceeds 130% of a rated current of an IGBT (Insulated Gate Bipolar Transistor) composing the inverter unit (113).

The overcurrent trip condition may include an overcurrent trip generation due to an output overcurrent. For example, an overcurrent trip may be generated when a current is above 250% of a rated current of the inverter unit (113).

The overvoltage trip may be generated when a voltage exceeding a rated voltage of the inverter unit (113) is applied.

The hardware fault condition may include a fault in a current detection circuit or a fault in the controller (150).

The predetermined external situation fault condition may include various alarms detected through a sensor installed at the upper level controller (160).

The memory (170) may store operation information according to the first operation mode or the second operation mode, and fault information generated in each of the operation modes, by being controlled by the controller (150). In addition, the memory (170) may provide the controller (150) with the stored operation mode and fault information. Manufacturers of the inverter may comprehend fault history in each operation mode with reference to the operation information and fault information stored in the memory (170).

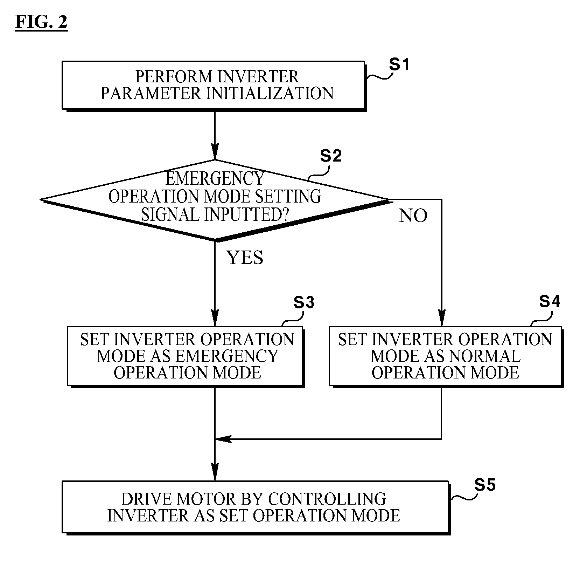

FIG. 2 is a view illustrating an inverter operation mode setting in an emergency situation according to an exemplary embodiment of the present disclosure.

Referring to FIG. 2, the controller (150) may perform an inverter parameter initialization (S1).

The controller (150) may determine whether an emergency operation mode setting signal is inputted from an upper level controller (160) (S2).

The controller (150) may set an operation mode of the inverter (110) as an emergency operation mode (S3), when the emergency operation mode setting signal is inputted from an upper level controller (160), in the result of the determination in step S2.

The controller (150) may set an operation mode of the inverter (110) as a normal operation mode (S4), when the emergency operation mode setting signal is not inputted from an upper level controller (160), in the result of the determination in step S2.

The controller (150) may drive a motor by performing a normal operation mode or an emergency operation mode according to the set operation mode to control the inverter (110) (S5).

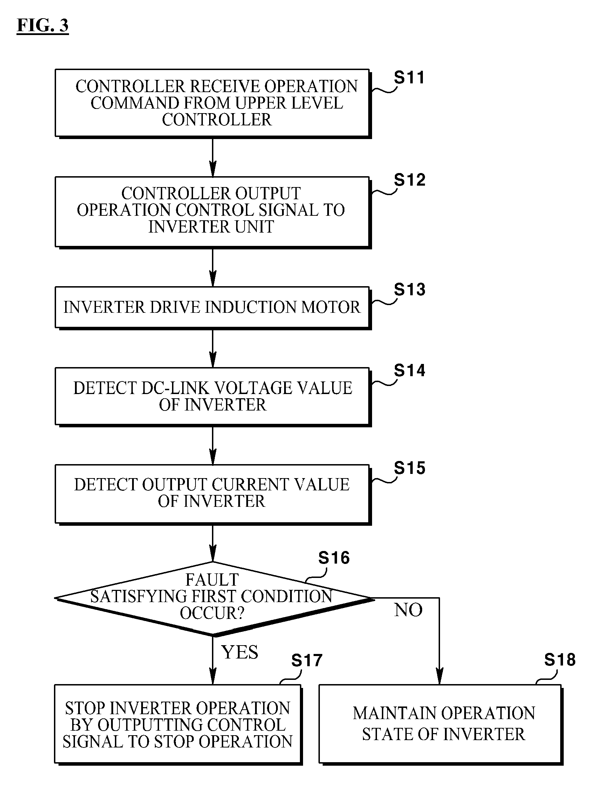

FIG. 3 is a flow chart illustrating an inverter operation control method when a first mode is set in a system for inverter operation control in an emergency situation according to an exemplary embodiment of the present disclosure.

Referring to FIG. 3, the controller (150) may receive an operation command from the upper level controller (160) (S11). The controller (150) may output a control signal for operation to the inverter unit (113) (S12). The inverter unit (113) may drive the induction motor (120) by performing operation according to a control signal of the controller (150) (S13).

The voltage detection unit (130) may detect a DC-link voltage value of the inverter (110) (S14).

The current detection unit (140) may detect an output current value of the inverter (110) (S15).

The controller (150) may determine whether a fault where the measured value of DC-link voltage or the measured value output current satisfies the first condition is generated (S16).

The controller (150) may stop an operation of the inverter (110) by outputting a control signal for stopping the operation to the inverter unit (113) (S17), when a fault where the measured value of DC-link voltage or the measured value output current satisfies the first condition is generated, in the result of the determination in step S16.

The controller (150) may maintain an operation state of the inverter (110) (S18), when a fault where the measured value of DC-link voltage or the measured value output current satisfies the first condition is not generated, in the result of the determination in step S16.

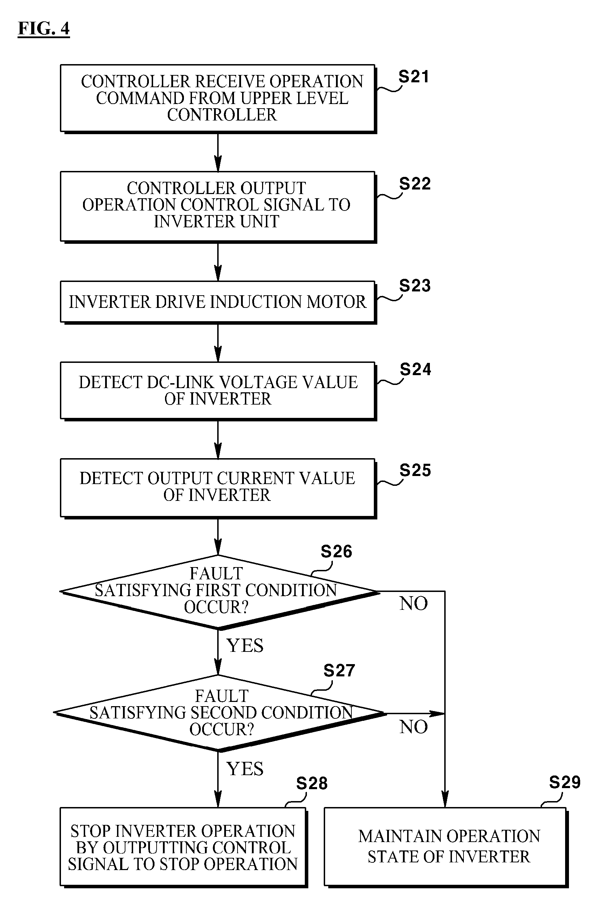

FIG. 4 is a flow chart illustrating an inverter operation control method when a second mode is set in a system for inverter operation control in an emergency situation according to an exemplary embodiment of the present disclosure.

Referring to FIG. 4, the controller (150) may receive an operation command from the upper level controller (160) (S11). The controller (150) may output a control signal for operation to the inverter unit (113) (S12). The inverter unit (113) may drive the induction motor (120) by performing operation according to a control signal of the controller (150) (S23).

The voltage detection unit (130) may detect a DC-link voltage value of the inverter (110) (S24).

The current detection unit (140) may detect an output current value of the inverter (110) (S15).

The controller (150) may determine whether a fault where the measured value of DC-link voltage or the measured value output current satisfies the first condition is generated (S26).

The controller (150) may determine whether a fault where the measured value of DC-link voltage or the measured value output current satisfies the second condition is generated (S27), when a fault where the measured value of DC-link voltage or the measured value output current satisfies the first condition is generated, in the result of the determination in step S26.

The controller (150) may stop an operation of the inverter (110) by outputting a control signal for stopping the operation to the inverter unit (113) (S28), when the measured value of DC-link voltage or the measured value output current satisfies the second condition, in the result of the determination in step S27.

The controller (150) may maintain an operation state of the inverter (110) (S29), when a fault where the measured value of DC-link voltage or the measured value output current satisfies the second condition is not generated, in the result of the determination in step S27.

The controller (150) may maintain an operation state of the inverter (110) (S29), when a fault where the measured value of DC-link voltage or the measured value output current satisfies the first condition is not generated, in the result of the determination in

### step S26.

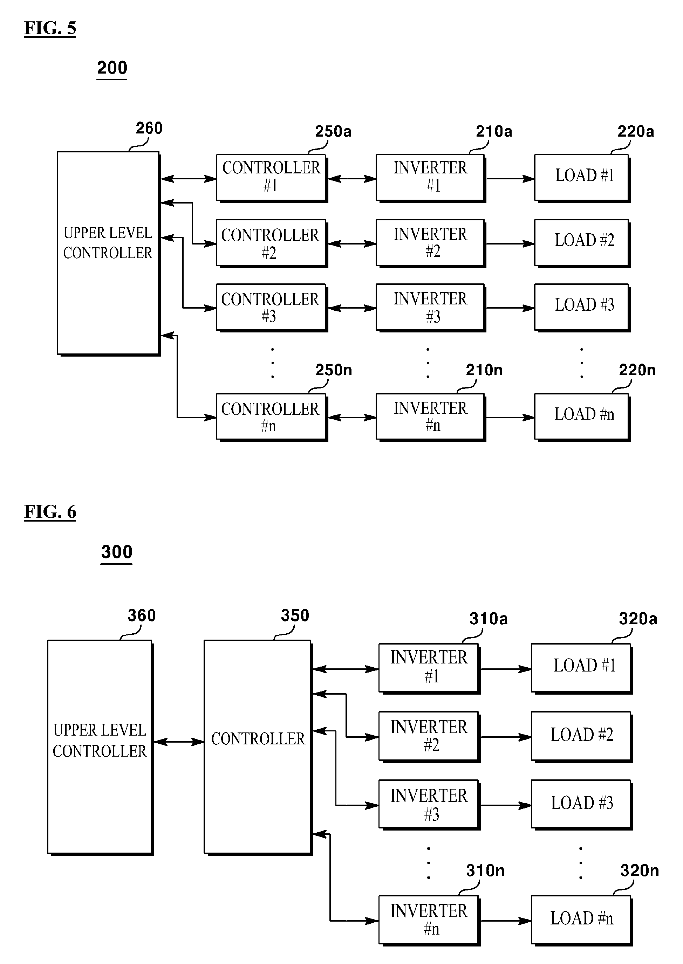

FIG. 5 is a block diagram illustrating a system for inverter operation control in an emergency situation according to another exemplary embodiment of the present disclosure.

Referring to FIG. 5, the system for inverter operation control (200) may include a plurality of inverters (210a ∼ 210n), a plurality of loads (220a∼220n), a plurality of controllers (250a∼250n), and an upper level controller (260).

Each of the plurality of inverters (210a∼210n) may include components corresponding to the rectification unit (111), the smoothing unit (112), and the inverter unit (113) as illustrated in FIG. 1. However, in FIG. 5, these components are not illustrated for the convenience of description.

Each of the plurality of inverters (210a∼210n) may drive each of the plurality of loads (220a∼220n), by being controlled by each of the plurality of controllers (250a∼250n).

Each of the loads (220a∼220n) may respectively be operated by an AC (Alternating Current) outputted from the plurality of inverters (210a∼210n). The plurality of loads (220a∼220n) may include, for example, a motor, a blower, a firefighting pump, and a ventilation fan in a tunnel.

Although it is not illustrated in FIG. 5, the system for inverter operation control (200) may include each of the components corresponding to the voltage detection unit (130) and the current detection unit (140), and may detect an overvoltage or an overcurrent flowing in each of the plurality of inverters (210a~210n) and the plurality of loads (220a∼220n).

Each of the plurality of controllers (250a∼250n) may generate control signals to control an operation of each of the plurality of inverters (210a∼210n) according to the detected voltage value and current value by the plurality of the voltage detection units and current detection units, and may transmit the generated control signals to the plurality of inverters (210a∼210n).

The upper level controller (260) may set an emergency operation mode for the relevant controller (250a∼250n) among the plurality of controllers (250a∼250n), in order to enable the relevant inverter (210a∼210n) to continuously operate in disregard of light faults, when the continuous operation of at least one of the plurality of inverters (210a∼210n) is required in a situation of emergency.

The upper level controller (260) may set a normal operation mode for the rest of t controllers (250a∼250n), excluding the controllers (250a∼250n) for which the emergency operation mode is set.

Accordingly, the controller for which the normal operation mode is set among the plurality of controllers (250a∼250n) may control operation of an inverter, by setting an operation mode of the relevant inverter among the plurality of inverters (210a∼210n) as the normal operation mode according to the setting operation of the upper level controller (260).

Meanwhile, the controller for which the emergency operation mode is set among the plurality of controllers (250a∼250n) may control operation of an inverter, by setting an operation mode of the relevant inverter among the plurality of inverters (210a∼210n) as the emergency operation mode according to the setting operation of the upper level controller (260).

The upper level controller (260) may set by selecting either one of the normal operation mode or the emergency operation mode based on a type of load driven by each of the plurality of inverters (210a∼210n).

The upper level controller (260) may set by selecting either one of the normal operation mode or the emergency operation mode based on a type or an importance of load driven by each of the plurality of inverters (210a∼210n).

The upper level controller (260) may set by selecting either one of the normal operation mode or the emergency operation mode based on an importance of electric power consumption possessed by a relevant load among a whole electric power consumption of load driven by each of the plurality of inverters (210a∼210n).

The upper level controller (260) may preset an operation mode for each of the plurality of inverters (210a~210n) before operation of the relevant inverter.

The upper level controller (260) may dynamically set an operation mode for each of the plurality of inverters (210a∼210n), based on a whole load, or when an emergency situation occurs during operation of a relevant inverter.

FIG. 6 is a block diagram illustrating a system for inverter operation control in an emergency situation according to still another exemplary embodiment of the present disclosure.

Referring to FIG. 6, the system for inverter operation control (300) may include a plurality of inverters (310a∼310n), a plurality of loads (320a∼320n), a controller (350), and an upper level controller (360).

Each of the plurality of inverters (310a∼310n) may include components corresponding to the rectification unit (111), the smoothing unit (112), and the inverter unit (113) as illustrated in FIG. 1. However, in FIG. 5, these components are not illustrated for the convenience of description.

Each of the plurality of inverters (310a∼310n) may drive each of the plurality of loads (320a∼320n), by being controlled by the controller (350).

Each of the loads (320a∼320n) may respectively be operated by an AC (Alternating Current) outputted from the plurality of inverters (310a∼310n). The plurality of loads (320a∼320n) may include, for example, a motor, a blower, a firefighting pump, and a ventilation fan in a tunnel.

Although it is not illustrated in FIG. 6, the system for inverter operation control (300) may include each of the components corresponding to the voltage detection unit (130) and the current detection unit (140), and may detect an overvoltage or an overcurrent flowing in each of the plurality of inverters (310a∼310n) and the plurality of loads (320a∼320n).

The controller (350) may generate control signals to control an operation of each of the plurality of inverters (310a∼310n) according to the detected voltage value and current value by the plurality of the voltage detection units and current detection units, and may transmit the generated control signals to the plurality of inverters (310a∼310n).

The upper level controller (360) may set an emergency operation mode for the controller (350), in order to enable the relevant inverter (310a∼310n) to continuously operate in disregard of light faults, when the continuous operation of at least one of the plurality of inverters (310a~310n) is required in a situation of emergency.

The upper level controller (360) may set a normal operation mode for the rest of t inverters (310a∼310n) through the controller (350), excluding the inverters (310a∼310n) for which the emergency operation mode is set.

Accordingly, the controller (350) may control operation of an inverter, by setting an operation mode of the relevant inverter for which the normal operation mode is set among the plurality of inverters (310a∼310n) as the normal operation mode according to the setting operation of the upper level controller (360).

Meanwhile, the controller (350) may control operation of an inverter, by setting an operation mode of the relevant inverter for which the emergency operation mode is set among the plurality of inverters (310a∼310n) as the emergency operation mode according to the setting operation of the upper level controller (360).

The upper level controller (360) may set by selecting either one of the normal operation mode or the emergency operation mode based on a type of load driven by each of the plurality of inverters (310a∼310n).

The upper level controller (360) may set by selecting either one of the normal operation mode or the emergency operation mode based on a type or an importance of load driven by each of the plurality of inverters (310a∼310n).

The upper level controller (360) may set by selecting either one of the normal operation mode or the emergency operation mode based on an importance of electric power consumption possessed by a relevant load among a whole electric power consumption of load driven by each of the plurality of inverters (310a∼310n).

The upper level controller (360) may preset an operation mode for each of the plurality of inverters (310a∼310n) before operation of the relevant inverter.

The upper level controller (360) may dynamically set an operation mode for each of the plurality of inverters (310a∼310n), based on a whole load, or when an emergency situation occurs during operation of a relevant inverter.

The abovementioned exemplary embodiments are intended to be illustrative, and not to limit the scope of the claims. Many alternatives, modifications, variations, and equivalents will be apparent to those skilled in the art. The features, structures, methods, and other characteristics of the exemplary embodiments described herein may be combined in various ways to obtain additional and/or alternative exemplary embodiments. Therefore, the technical scope of the rights for the present disclosure shall be decided by the claims and equivalents thereof.

## Claims

1. A system for inverter operation control in an emergency situation, the system comprising:
an inverter (110);
an upper level controller (260) configured to set a first operation mode for a normal operation of the inverter and a second operation mode in response to an emergency situation of the inverter (110); and
a controller (150) configured to control an operation of the inverter, by stopping an operation of the inverter (110) when a measured voltage value or a measured current value of the inverter (110) satisfies a first condition when the first operation mode is set, and by maintaining an operation of the inverter (110) even when a measured voltage value or a measured current value of the inverter (110) satisfies a first condition when the second operation mode is set, and
wherein the inverter (110) includes a plurality of inverters (210a),
the controller (150) includes a plurality of controllers (250a) installed corresponding to each of the plurality of inverters (210a),
the upper level controller (260) sets the first operation mode or the second operation mode with respect to at least one inverter (110) selected from the plurality of inverters (210a), and
each of the plurality of controllers (250a) controls an operation of the corresponding inverter (210a).

2. The system of claim 1, wherein
the controller (150) stops an operation of the inverter (110) when a measured voltage value or a measured current value of the inverter (110) satisfies a second condition, when the second operation mode is set.

3. The system of claim 2, wherein
the first condition includes at least one of a command loss, a voltage or current overload failing to reach the second condition, an output phase deficiency, a low voltage, or a fan trip generation.

4. The system of claim 2, wherein
the second condition includes a fault signal generation, possibly leading to a secondary damage to a device connected to the inverter (110), as well as to the inverter (110).

5. The system of claim 4, wherein
the second condition includes at least one of an overcurrent trip condition, an overvoltage trop condition, a hardware fault condition, or a predetermined external situation fault condition.

6. The system of claim 5, wherein
the overcurrent trip condition includes an overcurrent trip generation due to an arm short or an overcurrent trip generation due to an output overcurrent.

7. The system of claim 5, wherein
the hardware fault condition includes a fault in a current detection circuit or a fault in the controller.

8. The system of any one of claims 1 to 7, further comprising:
a voltage detection unit (130); and
a current detection unit (140), and
wherein the inverter (110) includes:
a rectification unit (111) configured to output by rectifying an inputted AC (Alternating Current) electricity;
a smoothing unit (112) configured to output a DC (Direct Current)-link voltage by smoothing an output voltage inputted from the rectification unit (111); and
an inverter unit (113) configured to output an AC (Alternating Current) voltage by converting a DC (Direct Current) voltage inputted from the smoothing unit (112) to the AC voltage,
wherein the voltage detection unit (130) measures a value of the DC-link voltage by being connected to the smoothing unit of the inverter (110), and the current detection unit (140) measures a value of an output current of the inverter by being connected to an output terminal of the inverter (110).

9. The system of any one of claims 1 to 8, further comprising:
a memory (170) configured, by being controlled by the controller (150), to store an operation information according to the first operation mode or the second operation mode, and a fault information generated in each of the operation modes.

10. The system of any one of claims 1 to 9, wherein
the upper level controller (260) sets by selecting either one of the first operation mode or the second operation mode based on a type or an importance of load driven by each of the plurality of inverters (210a).

11. The system of any one of claims 1 to 10, wherein
the upper level controller (260) sets by selecting either one of the first operation mode or the second operation mode based on an importance of electric power consumption possessed by a relevant load among a whole electric power consumption of load driven by each of the plurality of inverters (210a).

12. The system of any one of claims 1 to 11, wherein
the upper level controller (260) presets an operation mode for each of the plurality of inverters (210a) before operation of a relevant inverter.

13. The system of any one of claims 1 to 12, wherein
the upper level controller (260) dynamically sets an operation mode for each of the plurality of inverters (210a), based on a whole load, or when an emergency situation occurs during operation of a relevant inverter.
